## Europäisches Patentamt

## European Patent Office

## Office européen des brevets

(11) Publication number: **0 034 940**
**B1**

(12) **EUROPEAN PATENT SPECIFICATION**

(45) Date of publication of patent specification: **14.03.84**

(51) Int. Cl.³: **B 65 G 51/04, B 65 G 51/06, B 65 G 51/18**

(21) Application number: **81300743.2**

(22) Date of filing: **23.02.81**

(54) Pneumatic tube carrier system.

(30) Priority: **25.02.80 GB 8006236**

(43) Date of publication of application:
**02.09.81 Bulletin 81/35**

(45) Publication of the grant of the patent:
**14.03.84 Bulletin 84/11**

(84) Designated Contracting States:
**AT BE CH DE FR GB IT LI LU NL**

(56) References cited:
**DD - A - 67 927**
**DE - C - 167 206**
**DE - C - 323 886**
**FR - A - 562 071**
**GB - A - 1 047 634**
**GB - A - 1 338 052**
**GB - A - 2 005 212**
**US - A - 1 575 776**
**US - A - 1 951 820**
**US - A - 3 888 433**

(73) Proprietor: **D D Lamson Limited**
**Harbour Road**
**Gosport Hampshire PO12 1BG (GB)**

(72) Inventor: **Alexander, Donald**
**Parkbury Kiln Road**
**Fareham Hampshire (GB)**
Inventor: **Bartlett, Michael Lawrence**
**29, Elmhurst Road**
**Fareham Hampshire (GB)**
Inventor: **Lewis, Derek Lester**
**Hapton House Church Lane**
**Hambledon Hampshire (GB)**

(74) Representative: **Townsend, Derek Thomas**
**7 Addington Road**
**West Wickham Kent BR4 9BW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

This invention has reference to pneumatic tube carrier systems. For many years it has been known to provide pneumatic tube systems, for example for use in multiple stores, which systems comprise a main station and a plurality of subsidiary stations, each subsidiary station being connected to the main station by a pneumatic tube, and the system embodies means to convey carriers from the subsidiary stations to the main station and return the carriers to the station from which they were despatched. When such systems are installed in multiple stores the subsidiary stations are located at a point of sale and so arranged that a carrier receives a sale slip on which is recorded details of a transaction together with cash to effect payment for goods the subject of transaction. The carrier is despatched to the main station where the sales slip is processed and receipted and returned to the subsidiary station together with any change.

In many stores, for example, in supermarkets, goods are selected from the shelves of the supermarket by customers and taken to check out points where the customer pays for the goods taken from the shelves.

The money taken for the goods is stored in cash tills at the respective check out points and constitute a high security risk in so far as potential theft is concerned. The risk is especially high and special precautions have to taken when a supervisor collects cash from the check out points from time to time, and more particularly when such collections are made at peak trading times, to be deposited in a safe place within the supermarket premises.

It is also known to provide pneumatic tube systems, for example as described in French specification No. FR—A—562071, and German specification DE—C—323886 and DD—A—67927 which include bends of tight curvature and of larger cross section than the straight parts of the tube.

It is also known to provide flaps or vanes on a holder for use in a pneumatic tube system for example as shown in U.S.A. Specification Nos. 3888433 and 1951820 as well as DE—C—323886. In particular in U.S. specification 3888433 there is described a sealable envelope with flaps provided one on each side of the envelope and which serve as wings to pull the envelope through the pneumatic conveyor tube.

It is an object of the present invention to provide an improved pneumatic tube system.

It is a further object of the present invention to provide an improved pneumatic tube system for enabling cash to be transported in a simple and conventional manner from a vulnerable point of sale to a safe deposit.

It is a further object of the present invention to provide a pneumatic tube system which is suitable for fitting into confined spaces.

According to the present invention a pneumatic tube carrier system through which carriers are conveyed between a sending station and a receiving station has a tube of rectangular cross section connected between the stations and means for propelling a carrier of a rectangular cross section corresponding to the cross section of the tube through the tube and is characterised in that the tube has at least one bend of tight curvature between the terminals each bend of tight curvature consisting of a part of small radius and a large cross section connected between the straight part of the tube system and that the carrier used in the system has flexible vanes one on each end of two opposite sides of the carrier and which are urged into contact with the sides of the tube whereby air seepage between the carrier and the tube are reduced.

A pneumatic tube system in accordance with the present invention will now be described by way of example with reference to the accompanying drawings wherein:

Fig. 1 is a diagrammatic view of the system,

Figs. 2 and 3 are views of a receiving station and a sending station respectively;

Figs. 4 and 5 are views of a bend in the tube system;

Figs. 6 and 7 are views showing a different bend;

Figs. 8 and 9 are views of a junction and bend in the tube system;

Fig. 10 is a view of a twist tube in the tube system;

Figs. 11 to 18 are views of carriers for use in the system and

Figs. 19, 20, and 21 are further views of a tube.

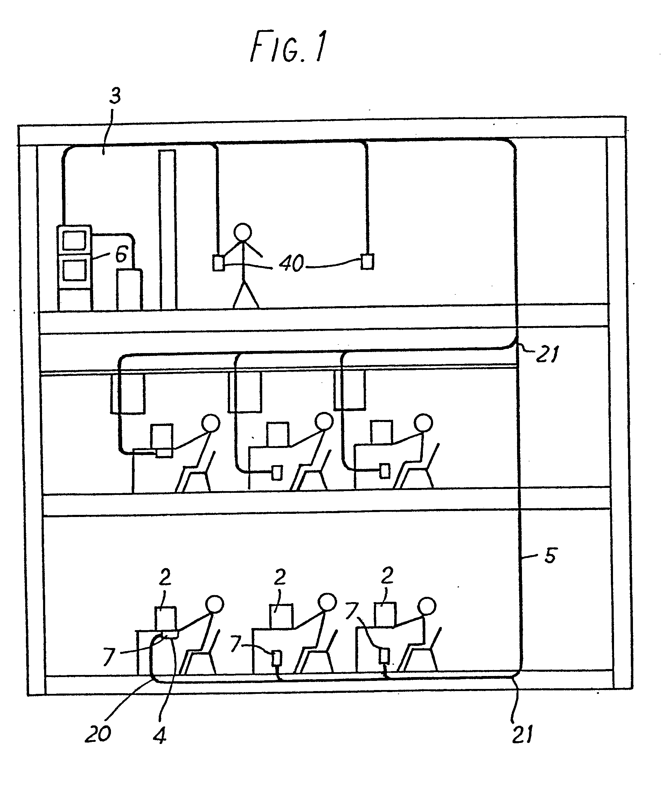

Referring to Fig. 1 of the drawings there is shown in diagrammatic form a pneumatic tube system for use for example in a supermarket. A plurality of cash desks illustrated at 2 embody cash recording apparatus to record details of the goods purchased and particularly the price of the goods purchased in the supermarket as well as a cash till and the usual ancillary apparatus. These cash desks are shown located on the ground floor and on the first floor of the supermarket. A safe cash receiving area is shown on the second floor of the supermarket at 3. A pneumatic tube sending terminal 4 is located on or closely adjacent to each of the cash desks 2, and sending terminal is connected to a pneumatic tube 5 which in turn is connected to a receiving station 6 in the cash safe retaining area 3.

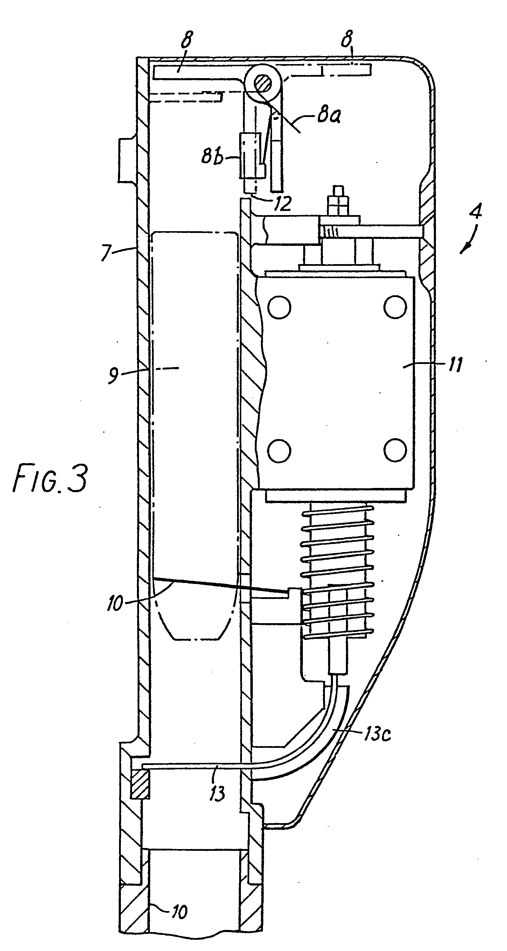

Each sending terminal 4 may be shown as in Fig. 3 and comprise a pneumatic tube terminal having a casing 7 with, as shown in Fig. 3 the end of the pneumatic tube 5 passing into the casing 7 from the bottom end. A security door 8 is positioned at the top of the casing and is normally positioned in the closed position (as shown in full lines in Fig. 3) but can be moved to the position as shown in chain lines when a carrier is to be inserted. A spring 8a or other biasing means causes the door to be retained closed and a microswitch 8b is located adjacent to the door which is operated when the door is opened. This switch is operative to prevent a carrier 9 from entering the tube 5 until the door 8 is closed again. The microswitch 8b serves to inhibit the operation of a solenoid (to be hereinafter described) as long as the door 8 is open. The switch 10b is included in a cyclic priority circuit to enable carriers from the respective stations to be dispatched in order of priority. Control means are included in the cyclic priority circuit to hand onwards from one station to the next station in sequence the priority of sending. The cyclic priority circuit associated with the various terminals are addressed in sequence and if the switch 10b is operative the circuits associated with that terminal to control the despatch of a carrier are rendered operative provided the system is not already in operation. By this means one station is prevented from having priority of despatch of carriers without the other terminals having the opportunity to despatch.

The tube 5 within the casing is long enough to receive a carrier 9 and to close the door 8. A carrier sensor mechanism 10 is included in the casing 7 associated with a microswitch 10b to sense when a carrier 9 has been inserted into the pneumatic tube system. A solenoid mechanism 11 is included which is operative when a carrier is ready for despatch to move an air seal shutter 13 at the bottom of the terminal 4 adjacent to the tube 5 to permit air to enter the tube to allow the carrier to travel out of the terminal 4 into and along the tube 5. Normally the air seal shutter 13 seals off the respective air sending station when it is not required to send a carrier from that particular station but it is moved to the open or carrier despatching position to permit vacuum air to enter the station 4. The air seal shutter 13 is moved by the solenoid mechanism 11 whose armature is connected to a flexible steel strip of the shutter 18 which strip is mounted in guides 13a at opposite sides of the strip. Apertures 12 are formed in the tube 5 to permit air to enter the tube to permit the carrier to move along the tube. When the solenoid 11 is operative its end remote from the end to which the flexible strip is attached extends closely adjacent to and into the path of the door 8 to prevent the door 8 being opened and a further carrier being inserted into the system where a carrier is being despatched.

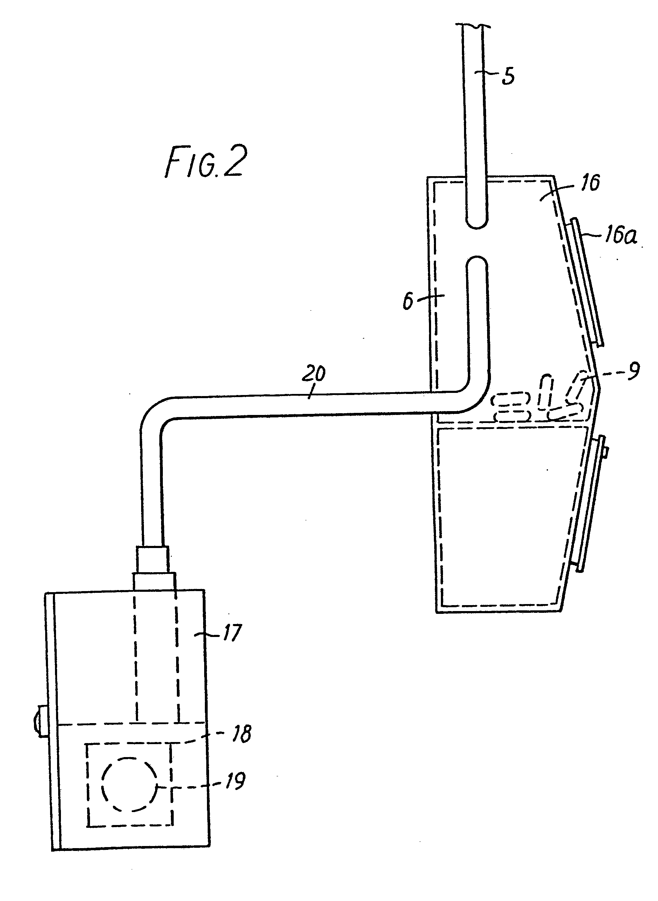

As shown in Fig. 2 the receiving station 6 is connected to the receiving end of the tube 5 and the end of the tube 5 communicates with a chamber or receiving station 16 to receive the carriers 9 despatched from the sending terminals 4 and which constitutes a pneumatic tube receiving terminal. This chamber is large enough to receive all the carriers despatched from all the sending terminals during peak periods. The chamber 16 has a door 16a which is capable of being locked and being opened by a responsible person. The door preferably pivots outwardly so that the door is urged closed by the low pressure within the chamber 16. Located in a separate chamber 17 and beneath the chamber 16 is an air pump preferably an air exhauster 18 to exhaust air from the chamber 16 through an exhaust aperture 19. The chamber 17 communicates with the chamber 16 through a connecting tube 19a and through the chamber 16 to the tube 5 and through the tube 5 to the respective terminals 4.

The sending terminals as shown in Fig. 1 are each located in close proximity with a corresponding cash desk 2 and a pneumatic tube 5 connecting the terminals 4 with the cash desk is required to take up the minimum amount of space. It is suitable to locate the tube 5 in the floor trunking but it is often more suitable to locate the tube in a false ceiling as shown on the first floor. Connection of the tubes can be achieved by providing bends 20 of tight curvature in the tube 5. Thus as shown in Fig. 1 the tubes 5 leading from the terminals 4 into the floor each pass through a tight bend 20 into trunking in the floor and through a further tight bend 21 into vertical channelling in a pillar or wall in the supermarket and thence to further channelling the ceiling on the third floor to the receiving station 6. Also the tubes leading from the terminals 4 on the first floor each pass through a tight bend 20 into a vertical channelling and through another tight bend 21 into the false ceiling.

The sending terminals 4 can be located on the side of the desk (as illustrated at the two rear positions on the ground floor and on the first floor in Fig. 1) or underneath the desk (as shown at the front position on the ground floor and first floor in Fig. 1). The location of these terminals is decided by virtue of the space available adjacent to the cash desk and the convenience of the cash desk operator.

If desired additional terminals as indicated at 40 may be included to serve for example conveying paperwork or money from the station 40 to the receiving station 6.

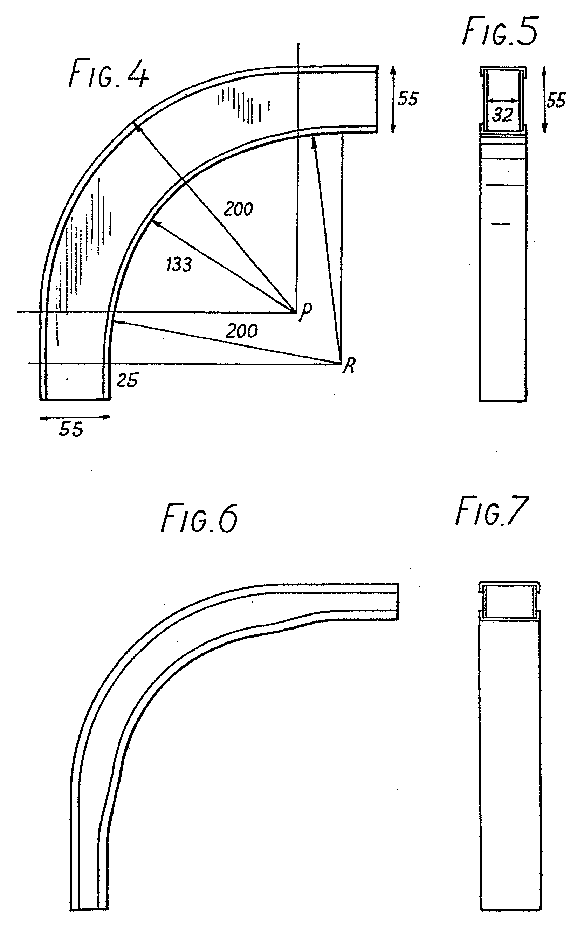

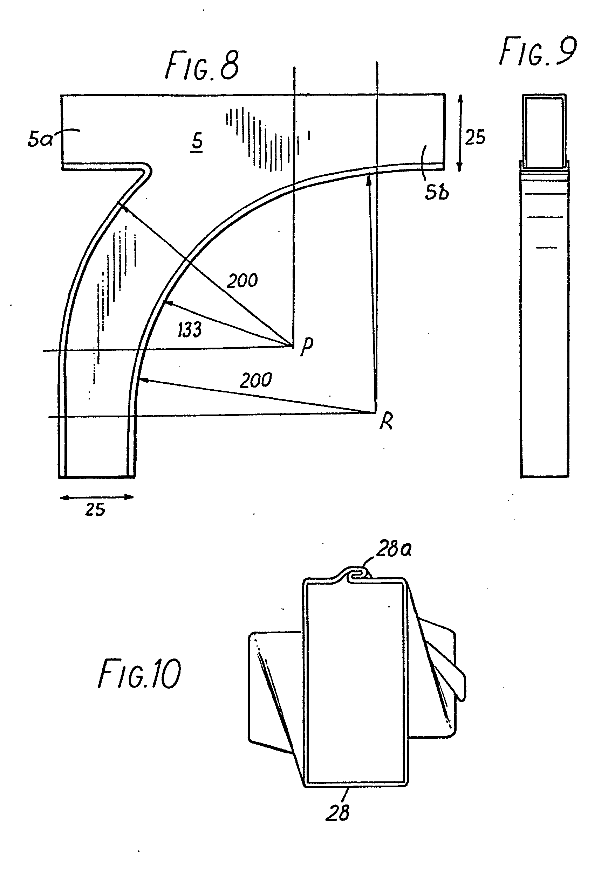

The pneumatic tube 5 contains bends of tight curvature as shown in Figs. 4 and 5 and in Figs. 6 and 7 and bends of tight curvature with a junction as shown in Figs. 8 and 9. The tube as illustrated in Figs. 4 and 5 is of rectangular shape in cross section and may be fabricated by any suitable means and for example may consist of top and bottom parts with flanges and side parts without flanges.

The curvature of the bends of the tubes is illustrated in Figs. 4 and 6. As shown in Fig. 4 a typical bend has a tight central curvature part having an internal curvature radius of 133 millimetres and an external curvature radius of 200 millimetres from the same point (P). This central curvature part is of larger cross section than the straight parts of the tube, that is to say the top and bottom of the tube and/or the respective sides of the tube are spaced apart by a greater distance than the top and bottom and respective sides of the straight parts of the tube. The straight parts of the tube has a height (as shown in Fig. 5) of 55 millimetres and a width of 32 millimetres and as shown the ends of the bend parts are straight for a distance of 25 millimetres. The intermediate parts of the bends joining the tight curvature centre part merges with the straight parts by respective intermediate curvature parts having an internal radius of 200 millimetres measured from point (R).

The tube shown in Fig. 4 and 5 curves in the plane containing the longer rectangular side of the tube 5 but the tube shown in Figs. 6 and 7 curves in the plane containing the shorter rectangular side of the tube 5.

A bend of tight curvature in conjunction with a junction is shown in Figs. 8 and 9 and the curvature of the centre part and the larger cross section is the same as shown in Figs. 4 and 5. The outer curvature of the central curvature part is merged through a tight turn with the part of the junction tube 5a. Similarly the dimensions of the parts merging with an adjacent tube 5b corresponds with that shown in Figs. 4 and 5.

A tube for use in the system may be as shown in Fig. 10 and consist of a length of strip metal folded into a rectangular section tube 28. The side ends of the tube are interlocked at 28a to make the tube substantially air tight. The interlock 28a as shown is arranged centrally of one of the smaller opposite ends of the tube and extends lengthwise of the tube. The tube as shown in Fig. 10 is a twist tube which twists from a position with the longer side of the tube in the vertical plane to a position with the longer side in the horizontal plane.

In order that a carrier can be used in a tight curvature pneumatic tube system the carriers 9 are made wholly or partly of flexible material to accommodate the tube. As shown in Figs. 11 to 18 a carrier 9 is made of canvas leather or other fabric or plastics material and has a body part 9a of rectangular shape in cross section. As shown in Figs. 11 to 13 the carrier is slightly narrower at its leading end (to the right of the carrier as shown in Fig. 11) and has an angle of inclination towards the part of the carrier of about 2°.

At the trailing end of the carrier the carrier has a mouth 9b through which bank notes or other matter may be inserted into the carrier are formed two flexible vanes 24 extending from the larger opposite sides of the carrier. These vanes are narrower at their outer ends. A closure member 25 also made of two flaps of canvas, or other fabric or plastics material, is secured to the inner face of its wider sides of the carrier. A closure clip 26 is provided near the outer end of the flaps which when closed retains the contents within the carrier. In a modified form of carrier, the carrier has flexible vanes extending from the two smaller opposite sides of the carrier instead of from the larger opposite sides. Also the closure clip 26 may comprise rough textile sealing material (for example as sold under the Trade Mark "Velcro") secured to a respective side of the closure flaps.

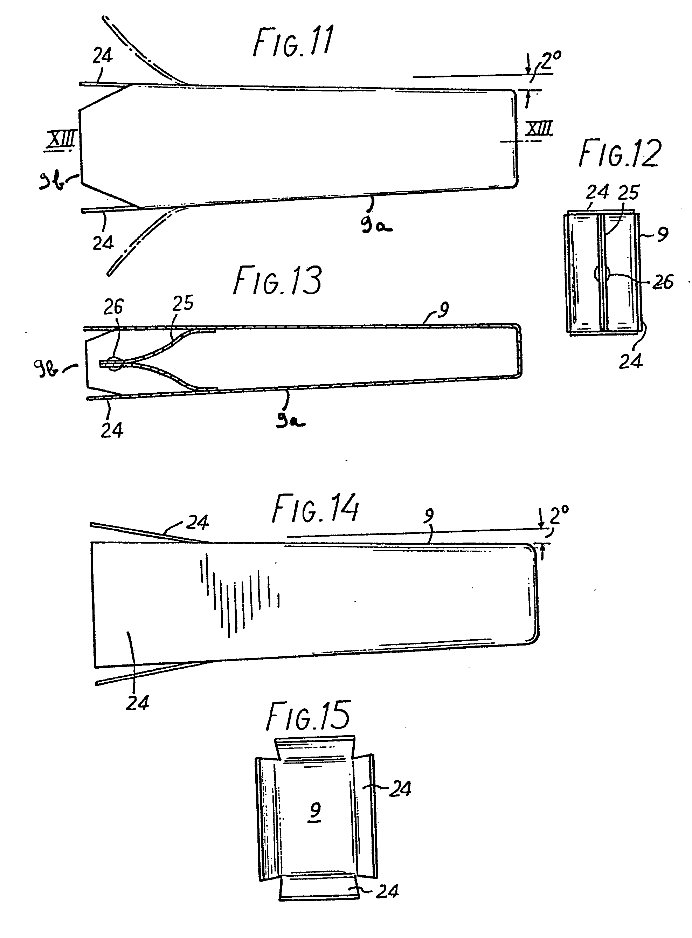

In the embodiment shown in Figs. 14 and 15 the carrier is made of canvas leather or other fabric of plastics material and is slightly narrower at its leading end than at its trailing end. The smaller opposite sides and the larger opposite sides of the carrier each have flexible vanes 24 extending from their trailing ends. The vanes are integral with the sides of the carrier.

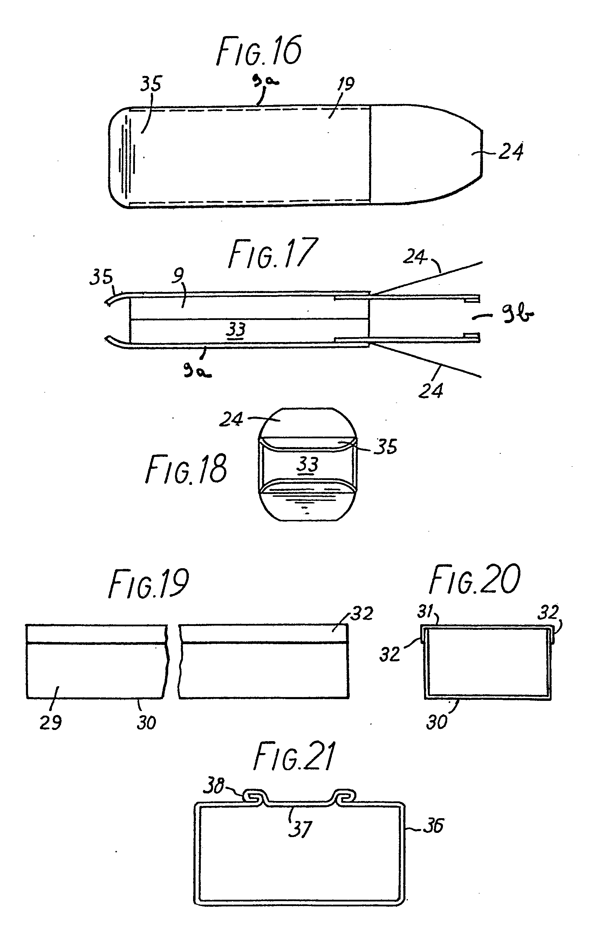

In the further modified embodiment shown in Figs. 16 to 18 the carrier 9 consists of a bag 33 of canvas leather or other fabric or plastics flexible material open at its trailing end and having vanes 24 extending from adjacent trailing end from the wider opposite sides of the carrier. The ends of the bag have a closure 25 of rough textile sealing material strips (sold under the Trade Mark "Velcro") for closing the bag and retaining it closed. Each of the larger sides of the bag is covered by a shield 35 of plastics material. This shield extends beyond the leading end of the bag and is turned inwardly towards the leading end to enable the carrier to ride over any obstructions on the inner face of the rectangular tube.

The carriers may be formed without the closure in which case the bank notes or other contents are retained in the carrier 9 by friction.

In operation of the system when a carrier is conveyed through the tube 5 the vanes of the carrier being flexible are urged into contact with the sides of the tube to form an air seal with the sides of the tube whereby air seepage between the carrier and the tube is reduced more particularly when the carrier is passing around a larger radius tight bend of the tube system. It will be apparent that the tube may curve in a horizontal or a vertical plane or even may curve in both horizontal and vertical planes so that the tube twists so that the carriers can move from a horizontal to a vertical plane. When a cashier finds that the note compartments of her cash till are becoming filled she extracts the notes and inserts them into the carrier 9 together with an indication of origin of the notes and/or other contents and closes the closure clip 26 of the closure member 25. She inserts the carrier into the sending terminal casing 7 into the position shown in Fig. 3 in chain dotted line and closes the door 8.

The control mechanism 11 operates to send the carrier 9. This operation may entail switching on the pump 17 and moving the shutter 13 to permit air at less than atmospheric pressure to draw the carrier 9 into the pneumatic tube and propel it to the station 6 where it is retained in the compartment.

The responsible person at a suitable time can remove the received carrier from the compartment 16 where the contents can be processed. The receiving station is located in a safe part of the building embodying safety means to prevent the likelihood of burglary. The carriers are returned to one of the respective terminals by hand where they can be used again to transmit further filing of notes to the safe cash receiving area. Because of the use of the tight curvature of the pneumatic tubes the system can be embodied in a limited space. Also by virtue of the use of the flexible carriers and the flexible vanes 24 which tend to be pulled outwardly by the air pressure to assist in providing a good air seal between the carrier and the pneumatic tube these tight bends are usable in an efficient manner.

In modifications of the tubes used in the tube system and as shown in Figs. 19 to 20 there is shown a different construction of pneumatic tube 5 comprising a three sided base part 28 formed by folding sides 29 from a bottom part 30 and a cover part 31 having flanges 32 at the respective sides and which flanges are sealed to the side of the folded over sides by spot or tack welds or by brazing and sealed with sealant. Also as shown in Fig. 21 the tube may be formed of a four sided box part 36, with an opening extending lengthwise of the tube and with the opening closed by a cover part each side of which interlocks with the sides of the opening. The interlocks 38 extend longitudinally of the tube 5.

Although the invention has been described in relation to a security pneumatic tube system for use as a security measure in a supermarket in which the carriers are despatched in one direction in the tube system from a cash desk terminal to a central station and the carriers are returned by hand to the cash desk terminals the invention may also be applied to other applications. For example, it may be applied to a double tube system comprising a central station and with a plurality of subsidiary stations and with a pair of tubes connecting the central station with the subsidiary stations. Each of the tubes includes a plurality of bends of tight curvature in order that the system can be installed in a confined space. It is arranged that flexible carriers (for example of the kind shown in Figs. 11 to 18) are despatched from the subsidiary station to the main station through one tube of the pair of tubes and returned to the main station through the other one of the pair of tubes.

It is envisaged that tubes of sizes different to those described may be used in the pneumatic tube system so that larger carriers, for use for example in conveying box files may be used. It is also envisaged that the system may be used for purposes other than conveying money or valuables.

## Claims

1. A pneumatic tube carrier system through which carriers (9) are conveyed between a sending station (2) and a receiving station (6) having a tube (5) of rectangular cross section connected between the stations (2, 6) and means for propelling a carrier (9) of a rectangular cross section corresponding to the cross section of the tube (5) through the tube (5) characterised in that the tube (5) has at least one bend (20 or 21) of tight curvature between the terminals each bend (20 or 21) of tight curvature consisting of a part of small radius and a large cross section connected between the straight part of the tube system and that the carrier used in the system has flexible vanes (24) one on each end of two opposite sides of the carrier and which are urged into contact with the sides of the tube (5) whereby air seepage between the carrier and the tube are reduced.

2. A pneumatic tube carrier system according to claim 1 characterised in that the carrier (9) comprises a body part (9a), at least a part of which being of flexible material and having a mouth (9b) opening at one end through which bank notes or other matter may be inserted into the carrier and having at least two vanes (24) provided at opposite sides of the mouth of the carrier and extending away from the mouth.

3. A pneumatic tube carrier system according to claim 1 used as a security system for transferring cash from a security risk area wherein the security system comprises a plurality of cash desk stations (2) each station (2) being located in a vulnerable security risk area and a safe cash station (6) located in a secure area with each cash desk station (2) including a pneumatic tube sending terminal (4) and a cash desk (2) and having an area to receive and locate a carrier (9) and each safe cash station (6) including a pneumatic tube receiving terminal (16) and connected with the sending terminal (4) and means for despatching carriers from the sending terminal (4) to the safe cash station (6) and the safe cash station (6) having a secure collecting area to retain a plurality of carriers (9) received from the sending terminal (4) and from which receiving terminal (16) the carrier can be collected by a responsible person.

## Revendications

1. Système a cartouches pour tube pneumatique dans lequel des cartouches (9) sont acheminées entre un poste expediteur (2) et un poste récepteur (6) comprenant un tube (5) de section rectangulaire reliant les deux postes (2, 6) et un moyen de propulsion de cartouche (9) de section rectangulaire correspondant a la section en coupe du tube (5) a travers le tube, caractérisé en ce que le tube (5) a au moins un coude (20 ou 21) ayant un rayon de courbure raide entre les terminaux, chaque coude (20 ou 21) étant constitué d'une partie a faible rayon et grande section en coupe dans la partie rectiligne du système de tube et en ce que la cartouche utilisée dans le système presente des ailettes flexibles (24), avec une ailette a chaque extremité des deux côtés opposes de la cartouche, ailettes qui sont sollicitées pour être amenées en contact avec les côtés du tube (5), d'ou il resulte que les fuites d'air entre la cartouche et le tube sont reduites.

2. Système a cartouches pour tube pneumatique selon la revendication 1 caractérisé en ce que la cartouche (9) comporte une partie de corps (9a), dont au moins une portion est constituée d'un matériau flexible et présentant une embouchure (9b) débouchant a l'une de ses extrémités grâce à laquelle des billets de banque ou autre matériau peuvent être inserés dans la cartouche et comprenant au moins deux ailettes (24) aux côtés de l'embouchure de la cartouche qui s'étendent en s'éloignant de l'embouchure.

3. Système a cartouches pour tube pneumatique selon la revendication 1 utilise en système de sécurité pour le transfert d'espèces entre une zone a risques ou le système de sécurité comprend une pluralité de postes (2) a caisse, chaque poste (2) étant situé dans une zone vulnerable a risques et un poste (6) d'espèces en sécurité situé dans une zone protegée, avec chaque poste (2) a caisse comprenant un terminal d'expedition (4) par tube pneumatique et une caisse (2) et ayant une aire destinée a recevoir et conserver une cartouche (9), et chaque poste d'espèces en sécurité (6) comportant un terminal (16) de reception par tube pneumatique et étant relié au poste d'expedition (4), ainsi qu'un moyen d'expedition de cartouches entre le poste d'expedition (4) et le poste d'espèces en sécurité (6), et le poste d'espèces en sécurité (6) ayant une aire de recueil protegée pour conserver une pluralité de cartouches (9) provenant du terminal d'expedition (4), une personne responsable pouvant venir prendre les cartouches au terminal de reception (16).

**Patentansprüche**

1. Pneumatische foerdervorrichtung, mittels der kassetten (9) zwischen einer sende-(2) und einer empfangsstation (6) gefoerdert werden, mit einem rohr (5) rechteckigen querschnitts, das zwischen den stationen (2, 6) angeordnet ist und mit einrichtungen zum foerdern einer kassette (9) durch das rohr (5), wobei die kassette (9) einer rechteckigen querschnitt aufweist, der dem querschnitt des rohrs (5) entpricht, dadurch gekennzeichnet, dass das rohr (5) wenigstens eine kurve (20 oder 21) enger kruemmung zwischen den beiden enden aufweist, wobei jede kurve (20 oder 21) enger kruemmung aus einem abschnitt geringen radius und grossen querschnitts besteht, der zwischen zwei geraden abschnitten des rohrsystems angeordnet ist, und dass die verwendeten kassetten (9) flexible flossen (24) aufweisen, von denen jeweils eine auf je einer von entgegengesetzten seiten des traegers (9) angeordnet ist und wobei die flossen (24) mit den innenwaenden des rohrs (5) in kontakt gedraengt werden, wodurch ein luftfluss zwischen der kassette (9) und den rohrwaenden reduziert wird.

2. Vorrichtung nach anspruch 1, dadurch gekennzeichnet, dass jede kassette (9) einen koerperteil (9a), von dem zumindestens ein teil aus flexiblem material besteht, und eine oeffnung (9b) an einem ende aufweist, durch welche banknoten oder anderes foerdermmaterial in die kassette (9) eingebracht werden kann, und dass wenigstens zwei flossen (24) an entgegengesetzten seiten der oeffnung (9b) der kassette (9) angeordnet sind und sich von der oeffnung (9b) forterstrecken.

3. Vorrichtung nach anspruch 1, in einer ausgestaltung als sicherheitssystem zum transport von bargeld aus einem risikobereich, gekennzeichnet durch eine vielzahl von bargeld-aufnahmestationen (2), wobei jede solche station (2) in einem verletzbaren risikobereich angeordnet ist, durch eine sicherheits-bargeldempfangsstation (6), die in einem sicherheitsbereich angeordnet ist, wobei jede bargeld-aufnahme-station (2) eine pneumatische sendestation (4) und einen empfangstisch sowie einen bereich zum aufnehmen und zwischenspeichern von kassetten (9) und jede bargeldsicherheitsstation (6) eine empfangsstation (16) des roehrensystems aufweist, die mit der sendestation (4) verbunden ist, und durch einrichtungen zum transport der kassette (9) von der sendestation (4) zur sicherheits-bargeldempfangsstation (6), wobei die emfangsstation (6) einen sicherheitssammelbereich zur aufnahme einer vielzahl von kassetten (9) aufweist, die sie von der sendestation (4) empfangen hat, und wobei die kassetten (9) von der empfangsstation (16) von einem verantwortlichen entgegennehmbar sind.

FIG.1

FIG.2

FIG.3

FIG.4

FIG.5

200

133

25

55

55

55

32

P

R

FIG.6

FIG.7

FIG.8

FIG.9

FIG.10

FIG. 11

FIG. 12

FIG. 13

FIG. 14

FIG. 15

FIG.16

FIG.17

FIG.18

FIG.19

FIG.20

FIG.21